# EUROPÄISCHE PATENTSCHRIFT

(11) **EP 2 411 666 B1**
(45) Veröffentlichungstag und Bekanntmachung des Hinweises auf die Patenterteilung: **16.01.2013**
(21) Anmeldenummer: 10703638.6
(22) Anmeldetag: 25.01.2010
(51) Int. Cl.: F03D 9/00, F03D 7/02

(54) **BLATTWINKELVERSTELLANTRIEB FÜR EINE WINDKRAFTANLAGE**
BLADE ANGLE ADJUSTMENT DRIVE FOR A WIND TURBINE
MOTEUR DE RÉGLAGE DE L'ANGLE DES PALES POUR UN AÉROGÉNÉRATEUR

(30) Priorität: 27.03.2009 DE 102009003691
(43) Veröffentlichungstag der Anmeldung: 01.02.2012
(73) Patentinhaber: SSB Wind Systems GmbH & Co. KG, 48499 Salzbergen (DE)
(72) Erfinder: KESTERMANN, Hermann, 48432 Rheine (DE); UPSING, Josef, 48432 Rheine (DE); WIBBEN, Norbert, 48499 Salzbergen (DE)
(74) Vertreter: Bossmeyer, Jörg Peter
(86) Internationale Anmeldenummer: PCT/EP2010/050810
(87) Internationale Veröffentlichungsnummer: WO 2010/108704

(56) Entgegenhaltungen:
- EP-A2- 1 739 807
- DE-A1- 10 335 575
- DE-A1-102006 009 127
- DE-U1-202005 012 040

## Beschreibung

Die Erfindung betrifft einen Blattwinkelverstellantrieb für eine Windkraftanlage, mit wenigstens einem elektrischen Umrichter, wenigstens einem mit dem Umrichter elektrisch gekoppelten Elektromotor, der durch den Umrichter gespeist wird oder werden kann, wenigstens einer Überwachungseinheit, mittels welcher der von dem Umrichter an den Elektromotor abgegebene elektrische Ausgangsstrom überwacht und in Abhängigkeit davon ein Belastungszustand des Umrichters bestimmt wird oder werden kann, und wenigstens einer Strombegrenzungseinheit, mittels welcher in einem überlasteten Zustand des Umrichters der maximal mögliche Ausgangsstrom auf einen Nennstrom reduziert wird oder werden kann, der kleiner als ein Spitzenstrom ist, den der Umrichter in einem nicht überlasteten Zustand als maximal möglichen Ausgangsstrom zur Verfügung stellt oder stellen kann. Ferner betrifft die Erfindung ein Verfahren zum Steuern eines Umrichters eines Blattwinkelverstellantriebs einer Windkraftanlage.

Die DE 20 2005 012 040 U1 offenbart eine elektrische Einrichtung zur Verstellung von Rotorblättern mit einer Konstantstromquelle mit Spannungsbegrenzung zur gleichzeitigen Speisung eines Wechselrichters und einer Zwischenkreiseinheit, wobei wahlweise ein Akkumulatorspeicher, bestehend aus einem Entkopplungsglied und einem Akkumulator, oder ein Zwischenkreiskondensator zum Einsatz kommt. Die Strom-Spannungs-Kennlinie der Konstantstromquelle ist mit Spannungsbegrenzung so eingestellt, dass die Zwischenkreiseinheit nur im Fall der Unterbrechung des Netzes oder bei kurzzeitigen hohen Lasten des Motors beansprucht wird und als Senke für aus dem Rotor der Windenergieanlage zurückgespeiste elektrische Energie fungiert.

Die DE 10 2006 009 127 A1 beschreibt eine Windenergieanlage mit einem Rotor mit Rotorblättern, deren Anstellwinkel mittels einer Pitchverstelleinrichtung änderbar ist, wobei zum Verstellen ein an einem Pitchkreis und einem Notkreis angeschlossener Stellmotor vorgesehen ist, wobei in einem Normalbetrieb die Rotorblätter mittels des Pitchkreises und in einem Notbetrieb mittels des Notkreises betätigt sind, und der Notkreis einen elektrischen Energiespeicher, eine Schalteinrichtung, Verbindungsleitungen zu dem Stellmotor und eine Schutzeinrichtung aufweist. Die Schutzeinrichtung umfasst ein Leistungsflussdetektormodul, das dazu ausgebildet ist, zu bestimmen, ob elektrische Leistung in den oder von dem Stellmotor fließt, und weiter ein Entlademodul, das dazu ausgebildet ist, bei einem Leistungsfluss von dem Stellmotor Spannung und/oder Strom in dem Notkreis zu begrenzen.

In Windkraftanlagen werden zur Regelung der Rotorblattposition Antriebe mit Umrichtern als Pitchantriebssysteme eingesetzt. Die Antriebssysteme können dabei sowohl auf Gleichstrombasis, bestehend aus Gleichstromumrichter und Gleichstrommotor (Reihenschlussmaschine, Nebenschlussmaschine oder auch Doppelschlussmaschine), als auch auf Wechselstrombasis, bestehend aus Frequenzumrichter (mit oder ohne vektororientierter Regelung) und Drehstrommaschine (Asynchronmaschine oder Synchronmaschine), ausgeführt sein. Zur Überbrückung von Spannungsschwankungen oder vorübergehenden Spannungseinbrüchen wird bei selbstgeführten Umrichtern mit Gleichspannungszwischenkreis ein Akku oder Kondensator über Dioden auf den Zwischenkreis gekoppelt. Somit kann für diese Situationen die benötigte Energie aus den Akkus genommen werden.

Um die maximale Strombelastbarkeit der Umrichter nicht zu überschreiten, wird der aktuelle Strom überwacht. Die zulässige Stromgrenze der Umrichter ist insbesondere derart gestaltet, dass für eine definierte Zeit ein dynamischer Spitzenstrom zugelassen wird, wonach auf einen Nennstrom reduziert wird, der geringer als der Spitzenstrom ist.

Bei Einsatz von Gleichstromantrieben wird für eine Notausfahrt in Richtung sichere Position (Fahnenstellung der Rotorblätter) der Motor über Schaltkontakte direkt auf einen Akku geschaltet. Zur Sicherstellung der erforderlichen Notausfahrt in Richtung sichere Position ist bei Wechselstrom somit ein Umrichter erforderlich. Dieses Konzept wird in analoger Weise vermehrt für Gleichstromantriebe eingesetzt, da somit die Notwendigkeit der Umschaltung entfällt.

Der dynamische Spitzenstrom steht in den Umrichtern eine spezifizierte Zeit zur Verfügung (abhängig von dem tatsächlichen Wert und von der Vorbelastung), wobei diese Zeit ohne jegliche Vorbelastung gültig ist. Anschließend wird auf den eingestellten Dauerstrom (Nennstrom) reduziert. Der Wert und die Zeitdauer sind fest vorgegeben. Ferner erfolgt die Überwachung des Stromes über eine sogenannte Ixt-Berechnung.

Bei entsprechender Vorbelastung und aktuellem Strombedarf kann es somit dazu kommen, dass der Umrichter nur noch den Nennstrom zulässt. Dies kann je nach Lastmoment dazu führen, dass der geforderte Drehzahlwert des betroffenen Motors nicht erreicht wird, bis hin zum Stillstand des Antriebs, was zu gefährlichen Unsymmetrien der Rotorblattpositionen führen kann. Über eine übergeordnete Überwachung der Rotorposition wird in einem solchen Fall schließlich die Notausfahrt ausgelöst.

Der Erfindung liegt somit die Aufgabe zugrunde, einen Blattwinkelverstellantrieb der eingangs genannten Art derart weiterzubilden, dass auch bei einer vorbelastung des Stromrichters der ordnungsgemäße Betrieb des Motors weitgehend sichergestellt werden kann.

Diese Aufgabe wird erfindungsgemäß durch einen Blattwinkelverstellantrieb nach Anspruch 1 und durch ein Verfahren nach Anspruch 10 gelöst. Bevorzugte Weiterbildungen der Erfindung sind in den Unteransprüchen gegeben.

Der erfindungsgemäße Blattwinkelverstellantrieb für eine Windkraftanlage weist wenigstens einen elektrischen Umrichter, wenigstens einen mit dem Umrichter elektrisch gekoppelten Elektromotor, der durch den Umrichter gespeist wird oder werden kann, wenigstens eine Überwachungseinheit, mittels welcher der von dem Umrichter an den Elektromotor abgegebene elektrische Ausgangsstrom überwacht und in Abhängigkeit davon ein Belastungszustand des Umrichters bestimmt wird oder werden kann, wenigstens eine Strombegrenzungseinheit, mittels welcher in einem überlasteten Zustand des Umrichters der maximal mögliche Ausgangsstrom auf einen Nennstrom reduziert wird oder werden kann, der kleiner als ein Spitzenstrom ist, den der Umrichter in einem nicht überlasteten Zustand als maximal möglichen Ausgangsstrom zur Verfügung stellt oder stellen kann, und wenigstens eine aktivierbare Zusatzeinheit auf, durch deren Aktivierung als maximal möglicher Ausgangsstrom der Spitzenstrom zur Verfügung gestellt wird oder werden kann, und zwar unabhängig vom Belastungszustand des Umrichters zum Zeitpunkt der Aktivierung. Insbesondere kann durch die Aktivierung als maximal möglicher Ausgangsstrom der Spitzenstrom für eine definierte Zeitdauer oder für zumindest eine definierte Zeitdauer zur Verfügung gestellt werden.

Durch die Aktivierung der Zusatzeinheit wird sichergestellt, dass der Spitzenstrom, insbesondere für die definierte Zeitdauer, auch dann noch zur Verfügung gestellt wird oder werden kann, wenn er aufgrund des Belastungszustands ohne Aktivierung gar nicht mehr oder nur noch für eine Zeitdauer zur Verfügung gestellt werden könnte, die kleiner als die definierte Zeitdauer ist. Somit kann in vielen Situationen der Motor ordnungsgemäß weiterbetrieben werden, in denen er ohne Zusatzeinheit zum Stillstand gekommen oder mit reduzierter Drehzahl betrieben worden wäre.

Die Aktivierung kann intern und/oder extern im bzw. vom Umrichter erfolgen. Eine externe Aktivierung erfolgt z.B. durch eine Steuerung, insbesondere durch eine Steuerung des Umrichters, des Blattwinkelverstellantriebs und/oder der Windkraftanlage. Der Spitzenstrom beträgt bevorzugt das eineinhalbfache oder/bis zweifache des Nennstroms.

In einem nicht überlasteten Zustand des Umrichters wird vorzugsweise mittels der Strombegrenzungseinheit der Ausgangsstrom auf den Spitzenstrom begrenzt oder kann darauf begrenzt werden. Insbesondere kann der Belastungszustand des Umrichters einen überlasteten Zustand, einen unbelasteten Zustand und/oder einen belasteten aber nicht überlasteten Zustand des Umrichters repräsentieren.

Ein den jeweiligen Belastungszustand des Umrichters charakterisierendes Belastungssignal wird bevorzugt mittels der Überwachungseinheit bestimmt oder kann mittels dieser bestimmt werden. Insbesondere repräsentiert das Belastungssignal zu einem Zeitpunkt immer nur einen der Belastungszustände.

Bevorzugt kann durch die Aktivierung der Zusatzeinheit der Wert des Belastungssignals auf einen den unbelasteten Zustand charakterisierenden Wert zurückgesetzt werden. Dieses Zurücksetzen erfolgt insbesondere durch die Zusatzeinheit. Durch das Zurücksetzen des Belastungssignals wird insbesondere die Vorgeschichte der Belastung des Umrichters gelöscht, sodass der Spitzenstrom zur Verfügung gestellt wird oder werden kann, vorzugsweise für eine Dauer oder für zumindest eine Dauer, die insbesondere der definierten Zeitdauer entspricht. Bevorzugt repräsentiert das zurückgesetzte Belastungssignal hinsichtlich der Belastung des Umrichters einen gerade erst eingeschalteten Zustand des Blattwinkelverstellantriebs. Durch das Zurücksetzen des Belastungssignals ist es möglich, den Spitzenstrom in Situationen zur Verfügung zu stellen, in denen bei Berücksichtigung der Vorgeschichte der Belastung des Stromrichters üblicherweise auf den Nennstrom reduziert worden wäre.

Damit eine durch das mehrfache Zurücksetzen des Belastungssignals verursachte Beschädigung des Umrichters vermieden werden kann, ist der zeitliche Abstand zwischen aufeinanderfolgenden Aktivierungen vorzugsweise nach unten begrenzt. Insbesondere beträgt der minimale zeitliche Abstand zwischen zwei unmittelbar aufeinanderfolgenden Aktivierungen wenigstens eine Mindestzeitdauer.

Das Belastungssignal ist vorzugsweise nicht nur abhängig von der aktuellen Belastung sondern auch von einer vorhergehenden Belastung des Umrichters. Der überlastete Zustand wird z.B. durch einen ersten Wert gekennzeichnet, wohingegen der unbelastete Zustand z.B. durch einen zweiten Wert gekennzeichnet wird, der sich von dem ersten Wert unterscheidet, insbesondere kleiner als der erste Wert ist. Abhängig von der Vorbelastung des Umrichters entspricht somit der Wert des Belastungssignals dem ersten Wert, dem zweiten Wert oder einem zwischen dem ersten Wert und dem zweiten Wert liegenden dritten Wert, der auch als Zwischenwert bezeichnet wird. Der zweite Wert ist vorzugsweise Null.

Die Überwachungseinheit lässt sich analog und/oder digital realisieren. Gemäß einer Weiterbildung der Erfindung umfasst die Überwachungseinheit eine Reihenschaltung aus einem Kondensator und einem Widerstand, an welche eine zu dem Ausgangstrom proportionale Spannung angelegt wird oder werden kann, wobei das Belastungssignal aus der an den Kondensator anliegenden Spannung gebildet wird. Eine Aktivierung der Zusatzeinheit erfolgt dann z.B. durch eine Entladung des Kondensators.

Gemäß einer alternativen Weiterbildung der Erfindung ist ein Digitalrechner vorgesehen, von dem die Überwachungseinheit ganz oder teilweise gebildet ist. Gemäß einer Ausgestaltung der Erfindung bildet der Rechner eine Reihenschaltung aus einem Kondensator und einem Widerstand numerisch nach oder kann diese nachbilden, an welche eine zu dem Ausgangsstrom proportionale Spannung angelegt wird oder werden kann, wobei das Belastungssignal aus der an dem Kondensator anliegenden Spannung gebildet wird, die mittels des Rechners bestimmt wird oder werden kann. Die zum Ausgangsstrom proportionale Spannung sowie die am Kondensator anliegende Spannung sind dabei insbesondere numerische Werte der numerischen Nachbildung der Reihenschaltung.

Jede der Einheiten kann ganz oder teilweise analog und/oder digital ausgebildet sein. Vorzugsweise sind somit auch die Zusatzeinheit und/oder die Strombegrenzungseinheit ganz oder teilweise von dem Rechner gebildet.

Zur Realisierung der Überwachungseinheit kann aber auch ein anderes numerisches Verfahren oder eine andere elektronische Schaltung eingesetzt oder numerisch nachgebildet werden, das bzw. die bezüglich des Umrichters einen unbelasteten Zustand, einen überlasteten Zustand und vorzugsweise auch wenigstens einen Zwischenzustand repräsentieren kann, der insbesondere einen belasteten aber nicht überlasteten Zustand des Umrichters repräsentiert und somit vorzugsweise zwischen dem unbelasteten und dem überlasteten Zustand liegt.

Bevorzugt ist wenigstens ein mit dem Elektromotor gekoppeltes Rotorblatt vorgesehen, welches mittels des Elektromotors um eine Rotorblattachse drehbar ist. Die Kopplung zwischen dem Elektromotor und dem Rotorblatt erfolgt insbesondere mechanisch.

Die Erfindung betrifft ferner eine Windkraftanlage mit einer Halterung, an der ein durch Wind antreibbarer oder angetriebener Rotor um eine Rotorachse drehbar gelagert ist, der eine Rotornabe und mehrere Rotorblätter aufweist, die jeweils um eine Rotorblattachse drehbar an der Rotornabe gelagert sind, und einem Blattwinkelverstellsystem, welches je Rotorblatt einen erfindungsgemäßen Blattwinkelverstellantrieb aufweist, mittels welchem das jeweilige Rotorblatt um seine Rotorblattachse drehbar ist. Dabei ist jedes Rotorblatt bevorzugt mit dem Elektromotor des jeweiligen Blattwinkelverstellantriebs gekoppelt, insbesondere mechanisch gekoppelt. Jeder der Blattwinkelverstellantriebe kann gemäß allen in diesem Zusammenhang beschriebenen Ausgestaltungen weitergebildet sein.

Die Anzahl der Rotorblätter beträgt vorzugsweise wenigstens zwei oder wenigstens drei. Insbesondere beträgt die Anzahl der Rotorblätter drei. Jede der Rotorblattachsen verläuft insbesondere quer oder schräg zur Rotorachse.

Die Erfindung betrifft ferner ein Verfahren zum Steuern eines Umrichters eines Blattwinkelverstellantriebs einer Windkraftanlage, wobei wenigstens ein mit dem Umrichter elektrisch gekoppelter Elektromotor durch den Umrichter gespeist wird, wobei der von dem Umrichter an den Elektromotor abgegebene elektrische Ausgangsstrom überwacht und in Abhängigkeit davon ein Belastungszustand des Umrichters bestimmt wird, wobei der maximal mögliche Ausgangsstrom in einem überlasteten Zustand des Umrichters auf einen Nennstrom reduziert wird, der kleiner als ein Spitzenstrom ist, den der Umrichter in einem nicht überlasteten Zustand als maximal möglichen Ausgangsstrom zur Verfügung stellt, und wobei auf eine Aktivierung hin als maximal möglicher Ausgangsstrom der Spitzenstrom zur Verfügung gestellt wird, und zwar unabhängig vom Belastungszustand zum Zeitpunkt der Aktivierung. Insbesondere wird auf die Aktivierung hin als maximal möglicher Ausgangsstrom der Spitzenstrom für eine definierte Zeitdauer oder für zumindest eine definierte Zeitdauer zur Verfügung gestellt.

Das erfindungsgemäße Verfahren wird bevorzugt unter Verwendung des erfindungsgemäßen Blattwinkelverstellantriebs durchgeführt, sodass das Verfahren gemäß allen in diesem Zusammenhang beschriebenen Ausgestaltungen weitergebildet sein kann. Das Merkmal, dass als maximal möglicher Ausgangsstrom der Spitzenstrom zur Verfügung gestellt wird, muss nicht zwangsläufig zur Folge haben, dass als Ausgangsstrom auch tatsächlich der Spitzenstrom fließt. Allerdings ist dies möglich.

Der Belastungszustand des Umrichters repräsentiert bevorzugt einen überlasteten Zustand des Umrichters, einen unbelasteten Zustand des Umrichters oder einen belasteten aber nicht überlasteten Zustand (Zwischenzustand) des Umrichters. Vorzugsweise wird ein den jeweiligen Belastungszustand des Umrichters charakterisierendes Belastungssignal bestimmt, wobei durch die Aktivierung der Wert des Belastungssignals insbesondere auf einen den unbelasteten Zustand charakterisierenden Wert zurückgesetzt wird.

Gemäß einer Weiterbildung der Erfindung wird an eine reale oder numerisch simulierte Reihenschaltung aus einem Kondensator und einem Widerstand eine zu dem Ausgangsstrom proportionale Spannung angelegt, wobei das Belastungssignal aus der an dem Kondensator anliegenden Spannung gebildet wird.

Die Reduzierung oder Begrenzung des maximal möglichen Ausgangsstroms auf den Nennstrom im überlasteten Zustand des Umrichters erfolgt bevorzugt durch die Strombegrenzungseinheit. Ferner werden der Ausgangsstrom und der Belastungszustand bevorzugt durch die Überwachungseinheit überwacht bzw. bestimmt. Das Zurücksetzen des Belastungssignals in den unbelasteten Zustand erfolgt vorzugsweise durch die Zusatzeinheit. Das Rotorblatt wird bevorzugt mittels des Elektromotors um eine Rotorblattachse gedreht.

Die Erfindung wird nachfolgend anhand einer bevorzugten Ausführungsform unter Bezugnahme der Zeichnung beschrieben. In der Zeichnung zeigen:
- Fig. 1:: eine schematische Darstellung einer windkraftanlage,
- Fig. 2:: ein schematisches Blockschaltbild eines Blattwinkelverstellantriebs,
- Fig. 3:: ein schematisches Blockschaltbild einer Überwachungseinheit,
- Fig. 4:: einen schematischen Verlauf des Belastungssignals,
- Fig. 5:: einen schematischen Verlauf des Motorstroms,
- Fig. 6:: eine schematische Darstellung der Überwachungseinheit gemäß einer Alternative und
- Fig. 7:: eine schematische Draufsicht auf den Rotor der Windenergieanlage.

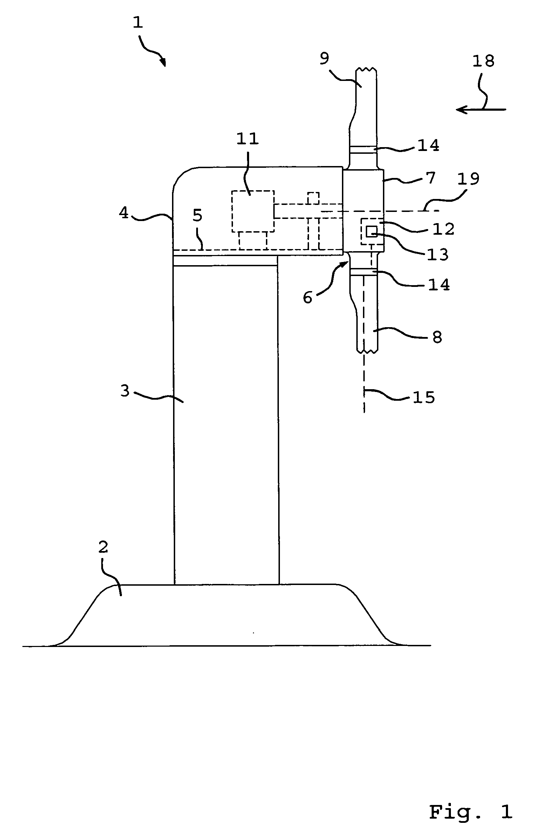

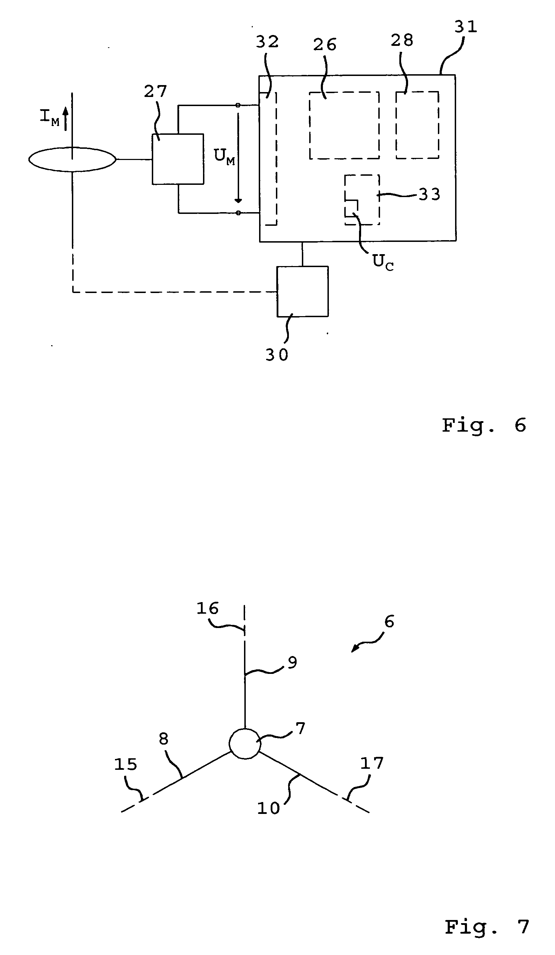

Aus Fig. 1 ist eine schematische Ansicht einer Windkraftanlage 1 ersichtlich, die einen auf einem Fundament 2 aufstehenden Turm 3 umfasst, an dessen dem Fundament 2 abgewandten Ende ein Maschinenhaus 4 angeordnet ist. Das Maschinenhaus 4 weist eine Halterung (Träger) 5 auf, an der ein Rotor 6 drehbar gelagert ist, der eine Rotornabe 7 und mehrere mit dieser verbundene Rotorblätter 8, 9 und 10 umfasst (siehe auch Fig. 7). Der Rotor 6 ist mechanisch mit einem elektrischen Generator 11 gekoppelt, der in dem Maschinenhaus 4 angeordnet und an dem Träger 5 befestigt ist.

In dem Rotor 6 ist ein Blattwinkelverstellsystem 12 angeordnet, welches Umrichter 13 umfassende Blattwinkelverstellantriebe 14 gemäß einer Ausführungsform der Erfindung aufweist, mittels welchen die Rotorblätter 8, 9 und 10 um ihre jeweilige Längsachse (Rotorblattachse) 15, 16 bzw. 17 relativ zur Rotornabe 7 gedreht werden können (siehe auch Fig. 7). Der Rotor wird durch Windkraft 18 um eine Rotorachse 19 gedreht.

Fig. 7 zeigt eine schematische Draufsicht auf den Rotor 6, sodass die drei Rotorblätter 8, 9 und 10 ersichtlich sind.

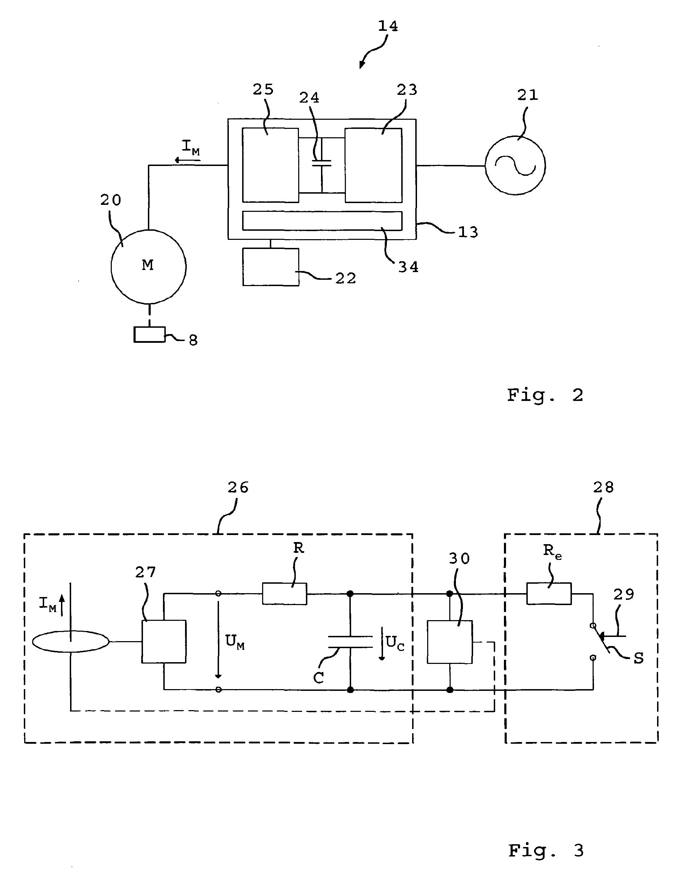

In Fig. 2 ist ein schematisches Blockschaltbild eines der Blattwinkelverstellantriebe 14 des Rotorblattverstellsystems 12 dargestellt, wobei ein hier als Gleichstrommotor ausgebildeter Elektromotor 20 elektrisch mit einem der Umrichter 13 gekoppelt ist, der mit einem elektrischen Versorgungsnetz 21 verbunden ist und aus diesem gespeist wird. Ferner ist der Umrichter 13 mit einer Steuerung 22 verbunden, mittels welcher der Umrichter 13 gesteuert wird. Der Umrichter 13 umfasst einen Gleichrichter 23, einen Zwischenkreis mit Kondensator 24 und einen Gleichstromsteller 25. Der Motor 20 ist mechanisch mit dem Rotorblatt 8 gekoppelt, welches mittels des Motors 20 um die Rotorblattachse 15 drehbar ist.

Wie aus Fig. 3 ersichtlich, umfasst der Umrichter 13 eine Überwachungseinheit 26, die eine Reihenschaltung aus einem Wiederstand R und einen Kondensator C aufweist, an welche eine zum Motorstrom (Ausgangsstrom) IM proportionale Spannung UM angelegt wird, die mittels eines Strommessers 27 ermittelt wird. Die an dem Kondensator anliegende Spannung UC bildet ein Belastungssignal, welches die Belastung des Stromrichters 13 kennzeichnet. Parallel zu dem Kondensator C ist eine Reihenschaltung aus einem Entladewiderstand Re und einem Schalter S geschaltet, wobei der Kondensator C durch Schließen des Schalters S entladen werden kann. Somit bildet die Schaltung aus dem Entladewiderstand Re und dem Schalter S eine Zusatzeinheit 28, mittels welcher der Kondensator C entladen und somit das Belastungssignal UC auf einen unbelasteten Zustand zurückgesetzt werden kann. Der Schalter S ist zum Entladen des Kondensators C mittels eines Aktivierungssignals 29 schließbar und kann z.B. als Relais oder Transistor ausgebildet sein. Das Aktivierungssignal 29 dient somit zur Aktivierung der Zusatzeinheit 28 und wird hier insbesondere von der Steuerung 22 abgegeben oder ist von dieser abgebbar. Der Widerstand Re ist vorzugsweise niederohmig, sodass eine rasche Entladung des Kondensators C erfolgen kann. Gemäß einer Alternative ist der Schalter S direkt parallel zu dem Kondensator C geschaltet, sodass der Widerstand Re entfällt.

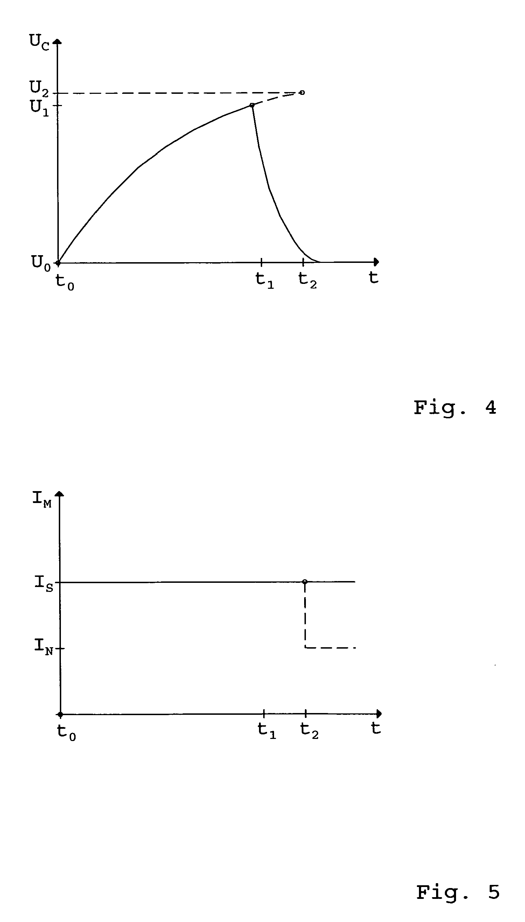

In Fig. 4 ist beispielhaft ein Verlauf des Belastungssignals UC über der Zeit t aufgetragen, wobei U0 den unbelasteten Zustand des Umrichters 13 zum Zeitpunkt t0 kennzeichnet. Als Motorstrom IM fließt hier dauerhaft ein maximal zulässiger Spitzenstrom IS, sodass der Kondensator C aufgeladen wird und die Spannung UC steigt. Zu einem Zeitpunkt t1 wird der Schalter S geschlossen und der Kondensator C entladen, sodass sich das Belastungssignal UC wieder dem unbelasteten Zustand U0 annähert. Der Spitzenstrom IS fließt somit weiter, was aus Fig. 5 ersichtlich ist, in der ein Verlauf des Motorstroms IM über der Zeit t aufgetragen ist. Zum Schaltzeitpunkt t1 weist die Spannung UC einen Wert U1 auf, der einen belasteten Zustand des Umrichters 13 kennzeichnet. Der Wert U1 liegt zwischen dem Wert U0 für den unbelasteten Zustand und einem Wert U2, der einen überlasteten Zustand des Umrichters 13 kennzeichnet. Für einen durch einen Wert UB gekennzeichneten zulässigen Belastungszustand des Umrichters 13 ergibt sich somit U0 ≤ UB < U2, wobei der Umrichter 13 im zulässigen Belastungszustand den Spitzenstrom IS zur Verfügung stellen kann. In Fig. 4 ist die den überlasteten Zustand des Umrichters 13 kennzeichnende Schwellenwertspannung U2 dargestellt.

Nachfolgend wird davon ausgegangen, dass der Schalter S zum Zeitpunkt t1 nicht geschlossen wird, sodass bei weiterhin fließendem Spitzenstrom IS die Spannung UC zu einem Zeitpunkt t2 den Schwellenwert U2 erreicht (in Fig. 4 gestrichelt dargestellt), was eine sofortige Reduzierung des Ausgangsstroms IM auf einen Nennstrom IN zur Folge hat (in Fig. 5 gestrichelt dargestellt), der kleiner als der Spitzenstrom IS ist. Diese Reduzierung des Motorstroms IM auf den Nennstrom IN erfolgt durch eine Strombegrenzungseinheit 30, die schematisch in Fig. 3 gezeigt ist. Die Überwachungseinheit 26, die Zusatzeinheit 28 und die Strombegrenzungseinheit 30 sind in Fig. 2 schematisch zu einem Block 34 zusammengefasst.

Aus Fig. 6 ist eine alternative Realisierung der Überwachungseinheit 26 ersichtlich, die hier durch einen Digitalrechner 31 gebildet ist. Die mittels des Strommessers 27 ermittelte Spannung UM wird in einem Analog-DigitalWandler 32 digitalisiert und vom Digitalrechner 31 verarbeitet. Dabei ist die Überwachungseinheit 26 als ein in dem Digital-Rechner 31 ablaufendes Programm numerisch verwirklicht, sodass das Belastungssignal UC ein Wert ist, der in einem Speicher 33 abgelegt ist. Das Zurücksetzen des Belastungssignals UC kann dann durch Überschreiben des dem Wert des Belastungssignals zugeordneten Speicherbereich im Speicher 33 erfolgen, insbesondere mit dem Wert U0, der z.B. Null ist. Ferner ist die Zusatzeinheit 28 als Teil des in dem Digital-Rechner 31 abgelaufenen Programms verwirklicht. Für den Fall, dass eine Überlastung des Umrichters 13 erfasst wird (UC ≥ U2), steuert der Digital-Rechner 31 die Strombegrenzungseinheit 30 entsprechend an.

### Bezugszeichenliste

- 1: Windkraftanlage
- 2: Fundament
- 3: Turm
- 4: Maschinenhaus
- 5: Träger / Halterung
- 6: Rotor
- 7: Rotornabe
- 8: Rotorblatt
- 9: Rotorblatt
- 10: Rotorblatt
- 11: elektrischer Generator
- 12: Blattwinkelverstellsystem
- 13: Umrichter
- 14: Blattwinkelverstellantrieb
- 15: Blattachse
- 16: Blattachse
- 17: Blattachse
- 18: Wind
- 19: Rotorachse
- 20: Elektromotor
- 21: elektrisches Netz, vorzugsweise Wechselstromnetz
- 22: Steuerung
- 23: Gleichrichter
- 24: Zwischenkreiskondensator
- 25: Gleichstromsteller
- 26: Überwachungseinheit
- 27: Strommesser
- 28: Zusatzeinheit
- 29: Aktivierungssignal
- 30: Strombegrenzungseinheit
- 31: Digitalrechner
- 32: Analog-Digitalwandler
- 33: Speicher
- 34: Block aus mehreren Einheiten

- R: ohmscher Widerstand
- Re: Entladewiderstand
- C: Kondensator
- IM: Motorstrom
- UM: zum Motorstrom proportionale Spannung
- UC: Belastungssignal
- U0: Spannung für unbelasteten Zustand
- U1: Spannung zum Schaltzeitpunkt
- U2: Schwellenwert, Spannung für überlasteten Zustand
- S: Schalter
- t0: Startzeitpunkt
- t1: Schaltzeitpunk
- t2: Zeitpunkt der Überlastung
- IS: Spitzenstrom
- IN: Nennstrom

## Patentansprüche

1. Blattwinkelverstellantrieb für eine Windkraftanlage, mit
- wenigstens einem elektrischen Umrichter (13),
- wenigstens einem mit dem Umrichter (13) elektrisch gekoppelten Elektromotor (20), der durch den Umrichter (13) gespeist wird oder werden kann,
- wenigstens einer Überwachungseinheit (26), mittels welcher der von dem Umrichter (13) an den Elektromotor (20) abgegebene elektrische Ausgangsstrom (IM) überwacht und in Abhängigkeit davon ein Belastungszustand des Umrichters (13) bestimmt wird oder werden kann,
- wenigstens einer Strombegrenzungseinheit (30), mittels welcher in einem überlasteten Zustand des Umrichters (13) der maximal mögliche Ausgangsstrom (IM) auf einen Nennstrom (IN) reduziert wird oder werden kann, der kleiner als ein Spitzenstrom (IS) ist, den der Umrichter (13) in einem nicht überlasteten Zustand als maximal möglichen Ausgangsstrom (IM) zur Verfügung stellt oder stellen kann,
**gekennzeichnet durch**
- wenigstens eine aktivierbare Zusatzeinheit (28), **durch** deren Aktivierung, unabhängig vom Belastungszustand des Umrichters zum Zeitpunkt der Aktivierung, als maximal möglicher Ausgangsstrom der Spitzenstrom zur Verfügung gestellt wird oder werden kann.

2. Blattwinkelverstellantrieb nach Anspruch 1,
**dadurch gekennzeichnet, dass**
durch die Aktivierung der Spitzenstrom als maximal möglicher Ausgangsstrom für eine definierte Zeitdauer zur Verfügung gestellt wird oder werden kann.

3. Blattwinkelverstellantrieb nach Anspruch 1 oder 2,
**dadurch gekennzeichnet, dass**
mittels der Strombegrenzungseinheit (30) in einem nicht überlasteten Zustand des Umrichters (13) der maximal mögliche Ausgangsstrom (IM) auf den Spitzenstrom (IS) begrenzt wird oder werden kann.

4. Blattwinkelverstellantrieb nach einem der vorangehenden Ansprüche,
**dadurch gekennzeichnet, dass**
der Belastungszustand des Umrichters (13) einen überlasteten Zustand des Umrichters (13), einen unbelasteten Zustand des Umrichters (13) und/oder einen belasteten aber nicht überlasteten Zustand des Umrichters (13) repräsentiert oder repräsentieren kann.

5. Blattwinkelverstellantrieb nach einem der vorangehenden Ansprüche,
**dadurch gekennzeichnet, dass**
- mittels der Überwachungseinheit (26) ein den jeweiligen Belastungszustand des Umrichters (13) charakterisierendes Belastungssignal (UC) bestimmt wird oder werden kann,
- mittels der Zusatzeinheit (28) der Wert des Belastungssignals (UC) auf einen den unbelasteten Zustand charakterisierenden Wert zurückgesetzt wird oder werden kann.

6. Blattwinkelverstellantrieb nach Anspruch 5,
**dadurch gekennzeichnet, dass**
die Überwachungseinheit (26) eine Reihenschaltung aus einem Kondensator (C) und einem Widerstand (R) umfasst, an welche eine zu dem Ausgangsstrom (IM) proportionale Spannung (UM) angelegt wird oder werden kann, wobei das Belastungssignal (UC) aus der an dem Kondensator (C) anliegenden Spannung gebildet wird oder werden kann.

7. Blattwinkelverstellantrieb nach Anspruch 5, **gekennzeichnet durch**
einen die Überwachungseinheit (26) ganz oder teilweise bildenden Digitalrechner (31), der eine Reihenschaltung aus einem Kondensator (C) und einem Widerstand (R) numerisch nachbildet oder nachbilden kann, an welche eine zu dem Ausgangsstrom (IM) proportionale Spannung (UM) angelegt wird oder werden kann, wobei das Belastungssignal (UC) aus der an dem Kondensator (C) anliegenden Spannung gebildet wird oder werden kann, die mittels des Rechners (31) bestimmt wird oder werden kann.

8. Blattwinkelverstellantrieb nach Anspruch 7,
**dadurch gekennzeichnet, dass**
die Zusatzeinheit (28) und/oder die Strombegrenzungseinheit (30) ganz oder teilweise von dem Rechner (31) gebildet sind.

9. Blattwinkelverstellantrieb nach einem der vorangehenden Ansprüche,
**gekennzeichnet durch**
wenigstens ein mit dem Elektromotor (20) mechanisch gekoppeltes Rotorblatt (8), welches mittels des Elektromotors (20) um eine Rotorblattachse (15) gedreht wird oder werden kann.

10. Verfahren zum Steuern eines Umrichters eines Blattwinkelverstellantriebs einer Windkraftanlage, wobei
- wenigstens ein mit dem Umrichter (13) elektrisch gekoppelter Elektromotor (20) durch den Umrichter (13) gespeist wird,
- der von dem Umrichter (13) an den Elektromotor (20) abgegebene elektrische Ausgangsstrom (IM) überwacht und in Abhängigkeit davon ein Belastungszustand des Umrichters (13) bestimmt wird,
- der maximal mögliche Ausgangsstrom (IM) in einem überlasteten Zustand des Umrichters (13) auf einen Nennstrom (IN) reduziert wird, der kleiner als ein Spitzenstrom (IS) ist, den der Umrichter (13) in einem nicht überlasteten Zustand als maximal möglichen Ausgangsstrom (IM) zur Verfügung stellt,
**dadurch gekennzeichnet, dass**
auf eine Aktivierung hin, unabhängig vom Belastungszustand zum Zeitpunkt der Aktivierung, als maximal möglicher Ausgangsstrom der Spitzenstrom zur Verfügung gestellt wird.

11. Verfahren nach Anspruch 10,
**dadurch gekennzeichnet, dass**
durch die Aktivierung als maximal möglicher Ausgangsstrom der Spitzenstrom (IS) für eine definierte Zeitdauer zur Verfügung gestellt wird.

12. Verfahren nach Anspruch 10 oder 11,
**dadurch gekennzeichnet, dass**
der Belastungszustand des Umrichters (13) einen überlasteten Zustand des Umrichters (13), einen unbelasteten Zustand des Umrichters (13) oder einen belasteten aber nicht überlasteten Zustand des Umrichters (13) repräsentiert.

13. Verfahren nach einem der Ansprüche 10 bis 12,
**dadurch gekennzeichnet, dass**
- ein den jeweiligen Belastungszustand des Umrichters (13) charakterisierendes Belastungssignal (UC) bestimmt wird,
- durch die Aktivierung der Wert des Belastungssignals (UC) auf einen den unbelasteten Zustand charakterisierenden Wert zurückgesetzt wird.

14. Verfahren nach Anspruch 13,
**dadurch gekennzeichnet, dass**
an eine reale oder numerisch simulierte Reihenschaltung aus einem Kondensator (C) und einem Widerstand (R) eine zu dem Ausgangsstrom (IM) proportionale Spannung (UM) angelegt wird, wobei das Belastungssignal (UC) aus der an dem Kondensator (C) anliegenden Spannung gebildet wird.

15. Verfahren nach einem der Ansprüche 10 bis 14,
**dadurch gekennzeichnet, dass**
das Rotorblatt (8) mittels des Elektromotors (20) um eine Rotorblattachse (15) gedreht wird.

## Claims

1. Blade angle adjustment drive for a wind turbine, having
- at least one electrical convertor (13),
- at least one electric motor (20) which is electrically coupled to the convertor (13) and which is or can be supplied with electrical power by the convertor (13),
- at least one monitoring unit (26), by means of which the electrical output current (IM) transmitted from the convertor (13) to the electric motor (20) is or can be monitored, and in accordance with which a load state of the convertor (13) is or can be determined,
- at least one power limitation unit (30), by means of which in an overloaded state of the convertor (13) the maximum possible output current (IM) is or can be reduced to a nominal current (IN) which is smaller than a peak current (IS) which the convertor (13) provides or can provide as a maximum possible output current (IM) in a non-overloaded state,
**characterised by**
- at least one actuatable auxiliary unit (28), by means of whose actuation, regardless of the load state of the convertor at the time of actuation, the peak current is provided or can be provided as the maximum possible output current.

2. Blade angle adjustment drive according to claim 1,
**characterised in that**,
owing to the actuation, the peak current is provided or can be provided as the maximum possible output current for a defined period of time.

3. Blade angle adjustment drive according to claim 1 or claim 2,
**characterised in that**,
by means of the current limitation unit (30), in a non-overloaded state of the convertor (13) the maximum possible output current (IM) is or can be limited to the peak current (IS).

4. Blade angle adjustment drive according to any one of the preceding claims,
**characterised in that**
the load state of the convertor (13) represents or may represent an overloaded state of the convertor (13), an unloaded state of the convertor (13) and/or a loaded but non-overloaded state of the convertor (13).

5. Blade angle adjustment drive according to any one of the preceding claims,
**characterised in that**
- by means of the monitoring unit (26), a load signal (UC) which characterises the respective load state of the convertor (13) is or can be determined,
- by means of the auxiliary unit (28), the value of the load signal (UC) is or can be reset to a value which characterises the unloaded state.

6. Blade angle adjustment drive according to claim 5,
**characterised in that**
the monitoring unit (26) comprises a series connection comprising a capacitor (C) and a resistor (R), to which a voltage (UM) which is proportional to the output current (IM) is or can be applied, the load signal (UC) being or being able to be formed from the voltage at the capacitor (C).

7. Blade angle adjustment drive according to claim 5,
**characterised by**
a digital processor (31) which completely or partially forms the monitoring unit (26) and which digitally simulates or can digitally simulate a series connection comprising a capacitor (C) and a resistor (R), to which a voltage (UM) which is proportional to the output current (IM) is or can be applied, the load signal (UC) being or being able to be formed from the voltage which is applied to the capacitor (C) and which is or can be determined by means of the processor (31).

8. Blade angle adjustment drive according to claim 7,
**characterised in that**
the auxiliary unit (28) and/or the current limitation unit (30) is/are completely or partially formed by the processor (31).

9. Blade angle adjustment drive according to any one of the preceding claims,
**characterised by**
at least one rotor blade (8) which is mechanically coupled to the electric motor (20) and which is or can be rotated about a rotor blade axis (15) by means of the electric motor (20).

10. Method for controlling a convertor of a blade angle adjustment drive of a wind turbine,
- at least one electric motor (20) which is electrically coupled to the convertor (13) being supplied with electrical power by the convertor (13),
- the electrical output current (IM) transmitted by the convertor (13) to the electric motor (20) being monitored and a load state of the convertor (13) being determined in accordance therewith,
- the maximum possible output current (IM) in an overloaded state of the convertor (13) being reduced to a nominal current (IN) which is smaller than a peak current (IS) which the convertor (13) provides as the maximum possible output current (IM) in a non-overloaded state,
**characterised in that**,
following an actuation, regardless of the load state at the time of actuation, the peak current is provided as the maximum possible output current.

11. Method according to claim 10,
**characterised in that**,
owing to the actuation, the peak current (IS) is provided as the maximum possible output current for a defined period of time.

12. Method according to claim 10 or claim 11,
**characterised in that**
the load state of the convertor (13) represents an overloaded state of the convertor (13), a non-loaded state of the convertor (13) or a loaded but non-overloaded state of the convertor (13).

13. Method according to any one of claims 10 to 12,
**characterised in that**
- a load signal (UC) which characterises the respective load state of the convertor (13) is determined,
- owing to the actuation, the value of the load signal (UC) is reset to a value which characterises the non-loaded state.

14. Method according to claim 13,
**characterised in that**
a voltage (UM) which is proportional to the output current (IM) is applied to a real or digitally simulated series connection comprising a capacitor (C) and a resistor (R), the load signal (UC) being formed from the voltage at the capacitor (C).

15. Method according to any one of claims 10 to 14,
**characterised in that**
the rotor blade (8) is rotated about a rotor blade axis (15) by means of the electric motor (20).

## Revendications

1. Entraînement de réglage de l'angle d'incidence des pales pour une éolienne, avec
- au moins un convertisseur électrique (13),
- au moins un moteur électrique (20), électriquement couplé au convertisseur (13), qui est ou peut être alimenté via le convertisseur (13),
- au moins une unité de surveillance (26) au moyen de laquelle le courant de sortie (IM) électrique transmis par le convertisseur (13) au moteur électrique (20) est surveillé et un état de charge du convertisseur (13) est ou peut être déterminé en fonction de ce courant,
- au moins une unité de limitation du courant (30) au moyen de laquelle, dans un état surchargé du convertisseur (13), le courant de sortie maximal possible (IM) est ou peut être réduit à un courant nominal (IN), qui est inférieur à un courant de crête (IS), que le convertisseur (13) fournit ou peut fournir dans un état non surchargé en tant que courant de sortie maximal possible (IM),
**caractérisé par**
- au moins une unité supplémentaire (28) activable dont l'activation permet, indépendamment de l'état de charge du convertisseur au moment de l'activation, de fournir ou de pouvoir fournir le courant de crête en tant que courant de sortie maximal possible.

2. Entraînement de réglage de l'angle d'incidence des pales selon la revendication 1, **caractérisé en ce que**, du fait de l'activation, le courant de crête est fourni ou peut être fourni en tant que courant de sortie maximal possible pendant une durée déterminée.

3. Entraînement de réglage de l'angle d'incidence des pales selon la revendication 1 ou 2, **caractérisé en ce que**, au moyen de l'unité de limitation du courant (30), dans un état non surchargé du convertisseur (13), le courant de sortie maximal possible (IM) est ou peut être limité au courant de crête (IS).

4. Entraînement de réglage de l'angle d'incidence des pales selon l'une des revendications précédentes, **caractérisé en ce que**
l'état de charge du convertisseur (13) représente ou peut représenter un état surchargé du convertisseur (13), un état non chargé du convertisseur (13) et/ou un état chargé mais non surchargé du convertisseur (13).

5. Entraînement de réglage de l'angle d'incidence des pales selon l'une des revendications précédentes, **caractérisé en ce que**
- au moyen de l'unité de surveillance (26), un signal de charge (UC) caractérisant l'état de charge respectif du convertisseur (13) est ou peut être déterminé,
- au moyen de l'unité supplémentaire (28), la valeur du signal de charge (UC) est ou peut être réinitialisée à une valeur caractérisant l'état non chargé:

6. Entraînement de réglage de l'angle d'incidence des pales selon la revendication 5, **caractérisé en ce que**
l'unité de surveillance (26) comprend un montage en série constitué d'un condensateur (C) et d'une résistance (R), auquel montage est appliquée ou peut être appliquée une tension (UM) proportionnelle au courant de sortie (IM), dans lequel le signal de charge (UC) est ou peut être formé à partir de la tension appliquée au condensateur (C).

7. Entraînement de réglage de l'angle d'incidence des pales selon la revendication 5, **caractérisé en ce que**
un calculateur numérique (31) formant intégralement ou partiellement l'unité de surveillance (26) et simulant ou pouvant simuler numériquement un montage en série constitué d'un condensateur (C) et d'une résistance (R), auquel est appliquée ou peut être appliquée une tension (UM) proportionnelle au courant de sortie (IM), dans lequel le signal de charge (UC) est ou peut être formé à partir de la tension appliquée au condensateur (C), tension qui est ou peut être déterminée au moyen du calculateur (31).

8. Entraînement de réglage de l'angle d'incidence des pales selon la revendication 7, **caractérisé en ce que**
l'unité supplémentaire (28) et/ou l'unité de limitation du courant (30) sont formées intégralement ou partiellement par le calculateur (31).

9. Entraînement de réglage de l'angle d'incidence des pales selon l'une des revendications précédentes, **caractérisé par**
au moins une pale de rotor (8) couplée mécaniquement avec le moteur électrique (20) et mise ou pouvant être mise en rotation autour d'un axe de pale de rotor (15) au moyen du moteur électrique (20).

10. Procédé de commande d'un convertisseur d'un entraînement de réglage de l'angle d'incidence des pales pour une éolienne, dans lequel
- au moins un moteur électrique (20) électriquement couplé au convertisseur (13) est alimenté par le convertisseur (13),
- le courant de sortie (IM) donné par le convertisseur (13) au moteur électrique (20) est surveillé et un état de charge du convertisseur (13) est déterminé en fonction de ce courant,
- le courant de sortie maximal possible (IM) est diminué, dans un état surchargé du convertisseur (13), à un courant nominal (IN), qui est inférieur à un courant de crête (IS) que le convertisseur (13) fournit en tant que courant de sortie maximal possible (IM) dans un état non surchargé,
**caractérisé en ce que**
lors d'une activation, indépendamment de l'état de charge au moment de l'activation, le courant de crête est fourni en tant que courant de sortie maximal possible.

11. Procédé selon la revendication 10, **caractérisé en ce que**,
du fait de l'activation, le courant de crête (IS) est fourni pendant une durée déterminée en tant que courant de sortie maximal possible.

12. Procédé selon la revendication 10 ou 11, **caractérisé en ce que**
l'état de charge du convertisseur (13) représente un état surchargé du convertisseur (13), un état non chargé du convertisseur (13) ou un état chargé mais non surchargé du convertisseur (13).

13. Procédé selon l'une des revendications 10 à 12, **caractérisé en ce que**
- un signal de charge (UC) caractérisant l'état de charge respectif du convertisseur (13) est déterminé,
- du fait de l'activation, la valeur du signal de charge (UC) est réinitialisé à une valeur caractérisant l'état non chargé.

14. Procédé selon la revendication 13, **caractérisé en ce**
**qu'**une tension (UM) proportionnelle au courant de sortie (IM) est appliquée à un montage en série réel ou simulé numériquement, constitué d'un condensateur (C) et d'une résistance (R), dans lequel le signal de charge (UC) est formé à partir de la tension appliquée au condensateur (C).

15. Procédé selon l'une des revendications 10 à 14, **caractérisé en ce que**
la pale du rotor (8) est mise en rotation autour d'un axe de pale de rotor (15) au moyen du moteur électrique (20).
